Europäisches Patentamt

European Patent Office

Office européen des brevets

(11) Numéro de publication: **0 306 582**
**A1**

## (12) DEMANDE DE BREVET EUROPEEN

(21) Numéro de dépôt: 87402026.6

(22) Date de dépôt: 11.09.87

(51) Int. Cl.4: **B60K 13/04** , **F01N 7/08**

(43) Date de publication de la demande:
**15.03.89 Bulletin 89/11**

(84) Etats contractants désignés:
**DE ES GB IT SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Maillet, Lionel**
**9, rue de Normandie**
**F-78650 Beynes(FR)**
Inventeur: **Arassus, Yves**
**24, rue Paul Olivier**
**F-92500 Rueil-Malmaison(FR)**

(74) Mandataire: **Réal, Jacques et al**
**8 & 10, avenue Emile Zola**
**F-92109 Boulogne-Billancourt(FR)**

(54) **Dispositif de suspension de l'échappement d'un moteur à combustion interne.**

(57) Dispositif de suspension de l'échappement d'un moteur à combustion interne. Il est constitué par une pièce de liaison (4) comportant à sa partie supérieure une sphère (5) coopérant avec la structure (3) du châssis, et à sa partie inférieure au moins un prolongement (6-7-40) pourvu d'un orifice (10-11-41) lui conférant de la souplesse, et d'un orifice (8-9-42) pour le passage d'au moins une patte rigide (16-17-43), solidaire par son extrémité opposée de l'élément d'échappement (1-2) à fixer.

FIG. 1

EP 0 306 582 A1

## DISPOSITIF DE SUSPENSION DE L'ECHAPPEMENT D'UN MOTEUR A COMBUSTION INTERNE.

La présente invention se rapporte à un dispositif de suspension de l'échappement d'un moteur à combustion interne.

De tels dispositifs sont généralement constitués de consoles métalliques soudées en différent points sous le châssis du véhicule le long du trajet de l'échappement auquel elles sont connectées par un fil métallique constituant le point d'accrochage de l'élément filtrant.

Un tel montage à positions prédéterminées et fixes présente l'inconvénient d'augmenter les dispersions de position des points d'accrochage.

De ce fait on augmente les risques de mise en contrainte de l'élément filtrant et donc les risques de transmission des vibrations et de détérioration précoce de l'élément filtrant.

De plus la rigidité de l'ensemble constitué par la console et le fil est faible, pénalisant le filtrage des vibrations transmises par le système d'échappement à la caisse.

La présente invention a pout but de pallier les inconvénients ci-dessus ; elle sera décrite, à titre d'exemple non limitatif, au regard des figures 1 à 4 ci-jointes, qui se rapportent respectivement :

- la figure 1, à une vue de dessus en perspective d'un pot pourvu d'un dispositif de suspension selon l'invention ;
- la figure 2, à une vue de face du dispositif de suspension selon l'invention ;
- la figure 3, à une vue de dessus du même dispositif ;
- la figure 4, à une vue de face d'une variante de l'invention.

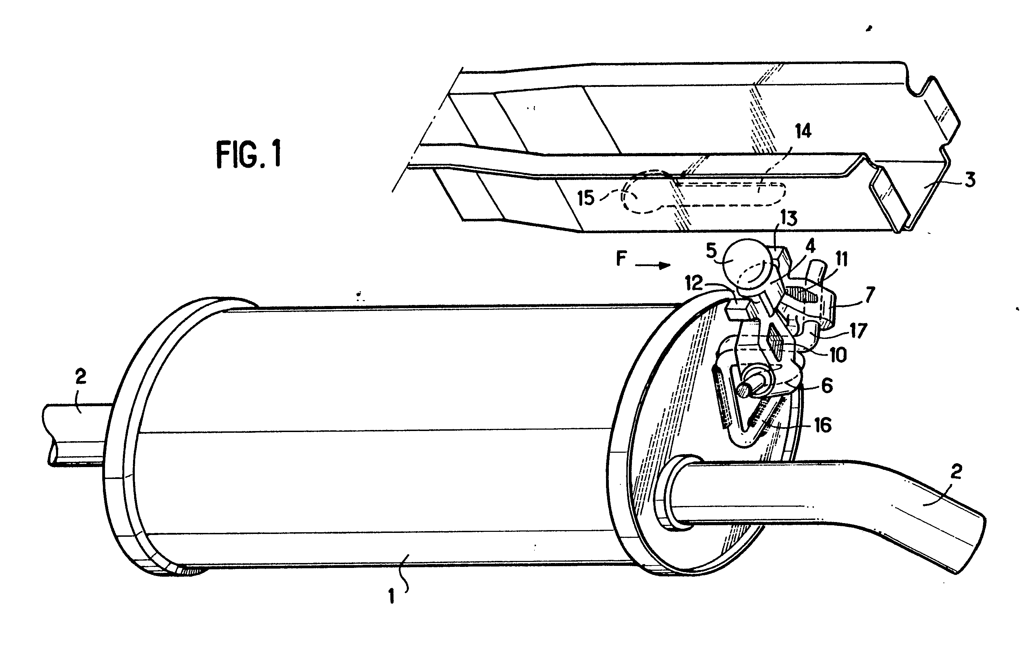

En référence à la figure 1, on voit la façon par laquelle un pot d'échappement 1 et ses tuyaux 2 sont solidarisés à des éléments, longeron et/ou traverse, fixés au châssis du véhicule.

La liaison ci-dessus est effectuée au moyen d'une pièce en élastomère 4 relativement rigide dont la partie supérieure comporte une sphère 5 et qui se poursuit vers le bas par deux prolongements 6-7 comportant des ouvertures 8-9 ; d'autres ouvertures 10-11, de préférence situées dans un plan perpendiculaire aux précédentes, sont ménagées dans les prolongements 6-7 afin de leur conférer une certaine souplesse ; des appuis 12-13 sont disposés à la partie supérieure de la pièce 4 au droit des prolongements 6-7 afin de coopérer avec le fond de la structure 3 recevant la sphère 5.

L'élément de châssis 3 comporte une ouverture longitudinale 14 dont une extrémité est découpée selon une ouverture élargie 15 dont les dimensions permettent le passage de l'extrémité sphérique 5 de la pièce de liaison 4.

Le montage du pot 1 et de son tuyau 2 s'opère de la façon suivante :

Des pattes rigides 16-17, soudées sur le pot 1 possèdent des extrémités libres dirigées selon l'axe des ouvertures 8-9 ménagées à la base des prologements 6-7 de la pièce de liaison 4, dans lesquels elles sont introduites ; l'ensemble ainsi obtenu est présenté sous l'élément de châssis 3 de façon à faire pénétrer la sphère 5 de la pièce 4 à travers l'ouverture élargie 15, puis on opère une translation de l'ensemble mobile dans le sens de la flèche F de façon à permettre l'appui de ladite sphère 5 sur la face inférieure du longeron ou de la traverse 3 sur laquelle elle peut donc rotuler. On se trouve alors dans la situation illustrée à la figure 1.

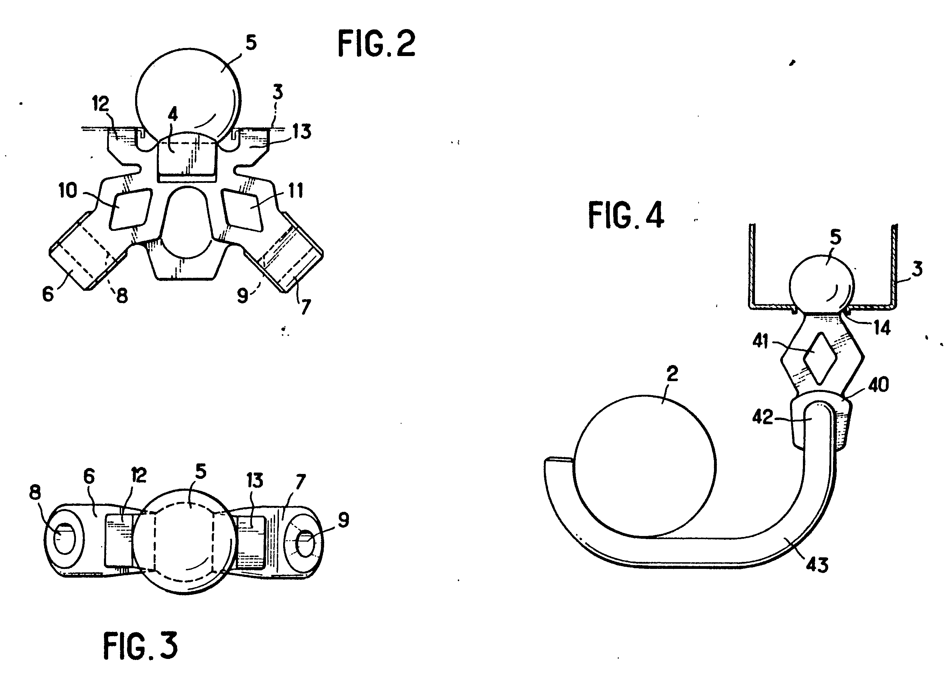

Une variante de réalisation de la pièce de liaison 4 est illustrée à la figure 4 ; elles comportent toutes les deux une tête sphérique 5, mais cette dernière variante ne comporte qu'un seul prolongement 40, dont les ouvertures, respectivement d'assouplissement 41 et de passage de la patte de fixation 43, sont dans un même plan, transversal par rapport à la poutre 3. Cette pièce de liaison est utilisée de préférence pour la fixation au niveau du tuyau 2 ; ce dernier repose sur la patte 43 formant ainsi un berceau.

La fixation de l'ensemble pot 1, tuyau 2 d'échappement, par le système de l'invention qui combine les dispositifs de la figure 1 et ceux de la figure 4, permet un déplacement relatif de l'ensemble ci-dessus par rapport au châssis, suffisant pour compenser les tolérances de fabrication et les dilatations thermiques, et donc pour éviter toute contrainte nuisible à la longévité du dispositif et la transmission des vibrations.

On notera que la forme sphérique de la tête 5 du dispositif de l'invention autorise de surcroît une certaine latitude de déplacement angulaire, allant également dans le sens de l'évacuation des contraintes.

On pourra par ailleurs faciliter l'automatisation du montage précédant en remplaçant le découpage 14-15 de la structure 3, par le boulonnage sur une structure non découpée, d'une pièce complémentaire adéquate présentant la découpe correspondante ; de cette façon, on simplifie de plus l'opération d'emboutissage donnant lieu à la traverse ou au longeron 3.

Une autre variante de ce montage consiste en une pièce 4 dont la tête 5 au lieu d'être sphérique est de forme sensiblement cylindrique, l'ouverture 14 dans la structure étant alors rectangulaire. Dans ce cas, la mise en place se fait par un mouvement vertical suivi d'une rotation de 90° autour d'un axe vertical.

## Revendications

1. Dispositif de suspension de l'échappement d'un moteur à combustion interne, caractérisé par le fait qu'il est constitué par une pièce de liaison (4) comportant à sa partie supérieure une sphère (5) coopérant avec la structure (3) du châssis, et à sa partie inférieure au moins un prolongement (6-7-40) pourvu d'un orifice (10-11-41) lui conférant de la souplesse, et d'un orifice (8-9-42) pour le passage d'au moins une patte rigide (16-17-43), solidaire par son extrémité opposée de l'élément d'échappement (1-2) à fixer.

2. Dispositif de fixation selon la revendication 1, caractérisé en ce que les orifices (10-11) et (8-9) sont disposés dans des plans perpendiculaires.

3. Dispositif selon la revendication 1, caractérisé en ce que les orifices (41) et (42) sont situés dans le même plan.

4. Dispositif selon la revendication 1, caractérisé en ce que des appuis (12-13) sont disposés à la partie supérieure de la pièce de liaison (4), afin de coopérer avec le fond de la structure (3) recevant la sphère (5).

5. Dispositif selon la revendication 1, caractérisé en ce que la pièce de liaison (4) est en un élastomère rigide.

6. Dispositif selon la revendication 1, caractérisé en ce que la structure (3) de châssis coopérant avec la sphère (5) de la pièce de liaison (4) est un longeron ou une traverse comportant une ouverture longitudinale (14) dont une extrémité est découpée selon une ouverture (15) permettant le passage de la sphère (5) pour le montage ainsi que l'appui en position de travail de l'élément filtrant.

7. Dispositif selon la revendication 1, caractérisé en ce qu'un support pour la sphère (5) comportant les ouvertures (14-15) est rapporté sur la structure (3) du châssis non découpée.

8. Dispositif de suspension de l'échappement d'un moteur à combustion interne, caractérisé en ce que la pièce de liaison (4) comporte à sa partie supérieure une tête sensiblement cylindrique coopérant avec la structure (3) du châssis pourvue à cet emplacement d'une ouverture rectangulaire permettant son passage.

FIG.1

FIG.2

5

12    4    3

13

10    11

6    8    9    7

FIG.3

8    6    12    5    13    7

9

FIG.4

5

3

14

41

2    40

42

43

EP 0 306 582 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 439 067  (WOOD) <br> * Colonne 2, ligne 49 - colonne 5, ligne 71; figures 1-10 * | 1 | B 60 K  13/04 <br> F 01 N    7/08 |
| A | US-A-4 550 795  (TESHIMA) <br> * Colonne 5, lignes 6-59; figures 3,4 * | 1,3,5 | |
| A | US-A-4 349 078  (SHIMADA) <br> * Colonne 1, lignes 22-25; colonne 2, lignes 29-38; figures 2,3 * | 1,3,5 | |
| A | CH-A-  456 266  (HUSSAUF) <br> * Colonne 1, ligne 32 - colonne 2, ligne 26; figures 1-3 * | 1 | |
| A | DE-B-1 225 925  (ZIMMERMANN) <br> * Colonne 5, lignes 6-59; figures 3,4 * | 1 | |
| E | FR-A-2 602 547   (RENAULT) <br> * En entier * | 1-8 | |

**DOMAINES TECHNIQUES RECHERCHES (Int. Cl.4)**

F 01 N
B 60 K
F 16 L

Le présent rapport a été établi pour toutes les revendications

| Lieu de la recherche | Date d'achèvement de la recherche | Examinateur |
|---|---|---|
| LA HAYE | 02-05-1988 | HAKHVERDI M. |

EPO FORM 1503 03.82 (P0402)